# EUROPEAN PATENT SPECIFICATION

(11) **EP 3 346 600 B1**
(45) Date of publication and mention of the grant of the patent: **16.11.2022**
(21) Application number: 18150480.4
(22) Date of filing: 05.01.2018
(51) Int. Cl.: H02P 6/08, B64G 1/28, B64G 1/42

(54) **HIGH EFFICIENCY ACTUATOR FOR USE IN A MOMENTUM CONTROL DEVICE**
HOCHEFFIZIENTER AKTUATOR ZUR VERWENDUNG IN EINER SCHWUNGSTEUERUNGSVORRICHTUNG
ACTIONNEUR À HAUTE EFFICACITÉ DESTINÉ À ÊTRE UTILISÉ DANS UN DISPOSITIF DE COMMANDE D'ÉLAN

(30) Priority: 06.01.2017 US 201762443237 P; 30.05.2017 US 201715608602
(43) Date of publication of application: 11.07.2018
(73) Proprietor: Honeywell International Inc., Charlotte, NC 28202 (US)
(72) Inventor: KRIEDER, Thom, Morris Plains, New Jersey 07950 (US); GILREATH, John Douglas, Morris Plains, New Jersey 07950 (US); STRONG, Ronald E., Morris Plains, New Jersey 07950 (US); VILLELA, Mark, Morris Plains, New Jersey 07950 (US); HADDEN, Steven, Morris Plains, New Jersey 07950 (US)
(74) Representative: Dowling, Andrew

(56) References cited:
- US-A1- 2002 180 388
- US-A1- 2012 325 970

## Description

### TECHNICAL FIELD

The present disclosure generally relates to momentum control devices and methods, and more particularly relates to motor control electronics for use in a momentum control device.

### BACKGROUND

Momentum control devices, such as control moment gyroscopes (CMGs) and reaction wheels, are commonly deployed within attitude control systems used in spacecraft, satellites, vehicles, and similar mobile platforms. A generalized momentum control device includes a rotor assembly rotatably mounted within a rotor assembly housing. The rotor assembly includes an inertial element, typically a rotating mass or an outer rim, which is fixedly coupled to a rotor shaft. During operation of a momentum control device, a motor, generally driven by a block of motor control electronics, causes the rotor assembly to rotate or spin about a spin axis. As the motor spins the rotor assembly, angular momentum is stored in the rotating inertial element. Angular momentum is then converted to torque (torque being the time derivative of angular momentum). Torque is exchanged with the spacecraft to change its attitude in space. In the course of spinning about the spin axis, the inertial element in the rotor assembly changes position, and this position may be referred to as a rotor position. To arrange three dimensional attitude control, multiple momentum control devices may be combined to form a reaction wheel array or assembly (RWA).

Patent document number US2002/180388A1 describes a digital motor controller circuit. The digital motor controller circuit includes an energy storage device, a bus protection circuit, an input signal selector, a combiner, a calibration device for altering parameters for different applications, a compensator, a motor driver circuit, and feedback circuitry for controlling a motor with a minimum of cost and space requirements.

Patent document number US2012/325970A1 describes methods and systems for controlling attitude of a vehicle using a reaction wheel onboard the vehicle. A described method involves receiving a torque command for adjusting the attitude of the vehicle using the reaction involves receiving a torque command for adjusting the attitude of the vehicle using the reaction wheel, determining a phase error of the reaction wheel based at least in part on the torque command, and determining a motor torque command for the reaction wheel based on the phase error. The motor torque command is provided to an electric motor of the reaction wheel to apply a corresponding torque to the rotor of the reaction wheel. The relationship between the magnitude of the motor torque command and the magnitude of the phase error is nonlinear. In exemplary embodiments, the magnitude of the motor torque command exceeds the stiction torque, at least instantaneously, when the reaction wheel has fallen behind an expected position by more than a threshold amount.

As satellite applications have evolved, the range of desirable satellite sizes has expanded. In particular, a field of small satellite applications has emerged that has made small satellites commercially desirable. To competitively produce efficient small satellites, all of the RWA components must reliably and efficiently scale down. In addition to smaller reaction wheels and smaller motors, a small satellite has less available real estate for the motor control electronics. The provided disclosure and embodiments address these needs as well as other design considerations.

### BRIEF SUMMARY

A motor controller in accordance with the present invention is as set out in claim 1 below.

A method for performing motor control, in accordance with the present invention is as set out in claim 9 below.

Optional features of the invention are as set out in the dependent claims below.

Other desirable features will become apparent from the following detailed description and the appended claims, taken in conjunction with the accompanying drawings and this background.

### BRIEF DESCRIPTION OF THE DRAWINGS

A more complete understanding of the subject matter may be derived from the following detailed description taken in conjunction with the accompanying drawings, wherein like reference numerals denote like elements, and wherein:
FIG. 1 is a simplified schematic block diagram of a RWA, in accordance with various embodiments;
FIG. 2 is a simplified block diagram of a controlled motor assembly for an RWA design, in accordance with various exemplary embodiments; and
FIG. 3 is a flow chart for a method for using the controlled motor assembly of FIG. 2 in a RWA.

### DETAILED DESCRIPTION

.

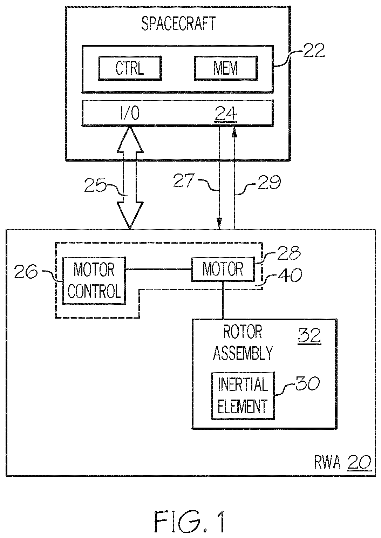

FIG. 1 depicts a simplified schematic block diagram of a RWA 20, in accordance with various embodiments. The RWA 20 may be part of a spacecraft 10 or may instead be part of a satellite or any mobile platform that utilizes momentum control devices. A spacecraft control module 22 and a multifunction input/output communication module 24 enable communication between the spacecraft 10 and the RWA 20. A spacecraft power bus 25, command input (to the RWA 20) on lead 27, and command output (from the RWA 20) on lead 29 are shown coupling the spacecraft 10 to the RWA 20. Within the RWA 20, a block of motor control electronics, motor controller 26, a motor 28, and an inertial element 30 (within a rotor assembly 32) are coupled together. Although only one motor 28 and one inertial element 30 are depicted, it is readily appreciated that, in practice, there may be more than one of the motors 28 and more than one of the respective inertial elements 30.

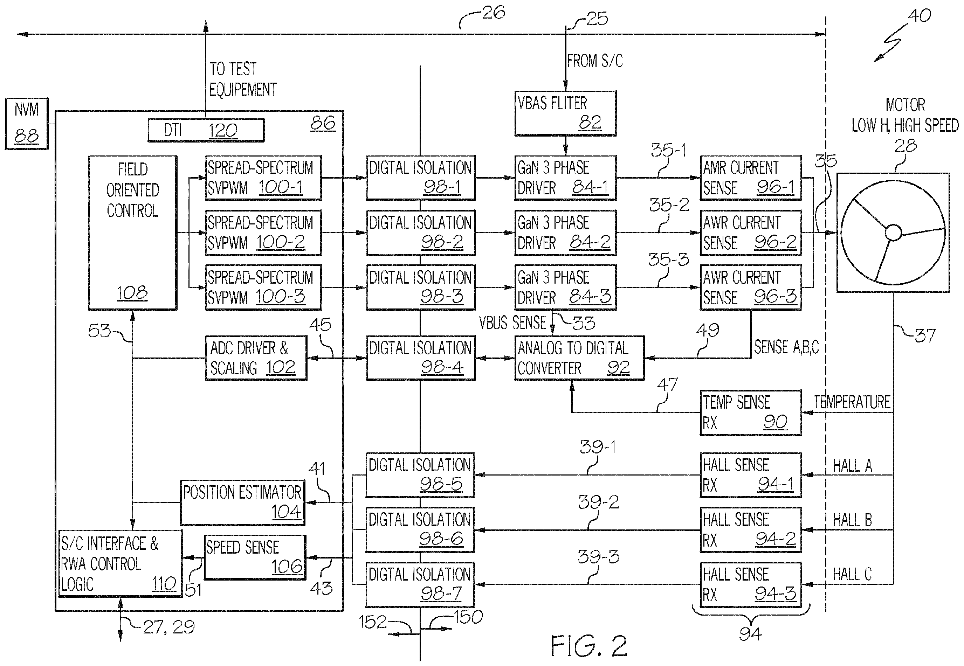

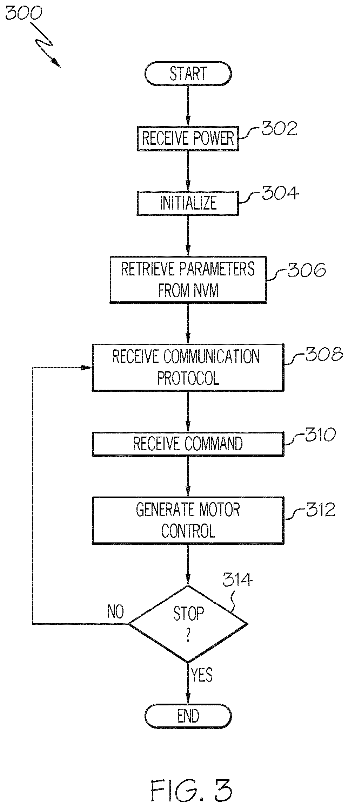

An object as contemplated herein is to combine the motor control electronics and the motor in a manner that optimizes efficiency, reliability, and scalability, in addition to reducing noise. Hereinafter, the optimized motor control electronics block is referred to as a motor controller 26, and the combination of the motor controller 26 and the motor 28 is referred to as a controlled motor assembly 40. The provided controlled motor assembly 40 is optimized to have a wide range of scalability. The provided controlled motor assembly 40 also delivers reduced cost and high efficiency while meeting the performance requirements of the small, or pico-satellite, RWA products. To this end, in various embodiments, the motor **28** (also referred to herein as an "AC motor" **28)** comprises a high speed alternating current (AC) permanent magnet synchronous motor (PMSM), a permanent magnet alternating current (PMAC) motor, or any of a plurality of types of high speed alternating current (AC) motors providing the features described herein. The controlled motor assembly **40** combines the motor **28** with a motor controller **26** that maximizes digital signal processing while minimizing analog signal processing. In order to support the plurality of types of high speed alternating current (AC) motors, the controlled motor assembly **40** employs nonvolatile memory, to store therein, parameters for each respective motor **28** type. Accordingly, the controlled motor assembly **40** can (automatically, and without maintenance intervention) detect the motor **28** type, and responsive to the detection, configure timing and memory management appropriate for the detected motor **28** type. These features are described in detail in connection with FIG. 2 and FIG. 3.

With reference to FIG. 2, a controlled motor assembly **40** for an RWA **20** design is provided. FIG. 2 depicts an AC motor **28,** and digital signal processing provided, in part, by a field oriented control (FOC **108).** Whereas designs that utilize direct current (DC) three phase motors (such as brushless DC motors) generally require a determination to be made by the motor controller **26** as to which two thirds of the time (i.e., which two out of three phases) to run current through the DC three phase motor, the utilized AC motor **28** is configured to operate on a continuous time domain controlled alternating current (AC) waveform. The AC motor **28** receives the continuous time domain controlled alternating current (AC) waveform via node **35** (hence, AC motor **28** is configured to be driven at all times). As is described in more detail below, the motor phase current waveform on node **35** that drives the AC motor **28** is a combination of motor phase current waveforms on nodes **35**-1, **35**-2, and **35**-3 based on one or more inputs from the spacecraft **10** (for example, lead **27** and spacecraft power bus **25).** Additionally, the exemplary embodiment utilizes a digital control system **86,** including the FOC **108,** maximizes the use of digital electronics in the generation of the current waveform on node **35,** and reduces the burden on the spacecraft control module **22,** as will be described in more detail below.

In the embodiment of FIG. 2, the motor controller **26** comprises a filter **82,** the digital control system **86,** and an arrangement of power switch elements **84.** In various embodiments, the motor controller **26** may additionally comprise one or more of: a temperature sensor **90,** an analog to digital converter **92,** current sensors **96,** and digital isolator **98.** A controlled motor assembly **40** may comprise the motor controller **26** described above and the AC motor **28.**

There are several I/O terminals (plus ground) coupled to the motor controller **26.** With reference to FIG. 2, the I/O terminals include (i) spacecraft power bus **25,** which includes a spacecraft power bus voltage (V_{BUS}) and also allows current to travel into and out of the motor controller **26** from the spacecraft **10,** (ii) a command input on lead **27,** which accepts commands from the spacecraft **10;** the commands may be provided using a plurality of different supported communication protocols, and (iii) a command output on lead **29.** The command input on lead **27** may be used for selectively adjusting from among the plurality of different communication protocols that are supported by the digital control system **86.** Selective adjustment may comprise sensing a user or system requested communication protocol (as a command input on lead **27)** and adjusting timing protocols and data management protocols within the digital control system **86** accordingly, prior to commencing receiving further commands on the lead **27.** In an embodiment, the lead **27** receives a user requested serial protocol and then receives input commands in accordance with the user requested serial protocol; however, in other embodiments the lead **27** receives commands in accordance with various parallel protocols. The command output on lead **29** may be a serial telemetric output or a serial command-response output, and is based on the command input on lead **27.**

The AC motor **28,** the digital control system **86,** and the arrangement of power switch elements **84** are coupled together, and, as is described herein, their configurations are functions of each other. The AC motor **28** is configured to operate on (or be driven by) a high frequency signal (the motor phase currents on nodes **35**-1, **35**-2, and **35**-3 collectively, motor phase currents on node **35).** For the purpose of this application, "high frequency" means approximately 200 KHz or greater. The high frequency signal on node **35** is sourced from the digital control system **86,** received as high frequency pulse width modulated (PWM) signals.

The digital control system **86** generates the high frequency signals (motor phase currents on nodes **35)** via the pulse width modulators **100**-1, **100**-2, and **100**-3, collectively PWM **100** (described in more detail below); these high frequency signals drive the arrangement of power switch elements **84** (switch **84**-1, switch **84**-2, and switch **84**-3), which results in the motor phase currents on node **35.**

Power switch elements **84** are configured to have fast switching speeds in order to accommodate the frequency of the AC motor **28.** In an embodiment, the power switch elements **84** are Gallium Nitride (GaN) transistors, and switch at least an order of magnitude faster than a silicon MOSFET switch. The power switch elements **84** are coupled between the AC motor **28** and the filter **82,** providing a path for the motor phase currents on nodes **35-**1, **35**-2, and **35**-3. The digital control system **86** controls activation of the power switch elements **84,** based on a command input, the position sensor feedback and the parameters associated with the AC motor, and control is exerted over the activation of the power switch elements **84** via the PWM **100.** The parameters may be stored in non-volatile memory (NVM) **88.** A change in any one of: the command input, the position sensor feedback and the parameters associated with the AC motor, triggers a change in the PWM **100** components, which triggers a change in activation of the power switch elements **84.** As used herein, if "A" triggers "B", then B is responsive to A. In an embodiment, controlling the activation of the power switch elements **84** further comprises separately controlling power switch elements **84,** for example, by controlling (via the PWM **100** components) a sequence of activation for which the switch **84**-1 drives node **35**-1, the switch **84**-2 drives the node **35**-2, and the switch **84**-3 drives the node **35**-3. Current may travel into and out of the arrangement of power switch elements **84** via an internal RWA bus **31** and the spacecraft power bus **25**

The filter **82** is configured to inhibit electrical noise and electromagnetic noise from being coupled between the spacecraft power bus **25** and the internal RWA bus **31.** The required filter **82** size is also based on the AC motor **28** frequency and the pulse width modulators **100**-1, **100**-2, and **100**-3. The required filter **82** size has an inverse relationship to the AC motor **28** frequency; as the AC motor **28** frequency is increased, the filter **82** size may be reduced. In addition, the filter **82** is configured based on the high dv/dt pulse width modulated (PWM) edges. In practice, locating the filter **82** as close as possible to the arrangement of power switch elements **84** may reduce the stress the AC motor **28** normally sees due to high frequency operation.

The individual current sensors **96**-1, **96**-2, **and 96**-3 (collectively current sensor **96)** may comprise any commercially available current sensing device or technology. Individual current sensors **96**-1, **96**-2, **and 96**-3, may be located on the individual nodes **35**-1, **35**-2, and **35**-3, respectively, coupled between the arrangement of power switch elements **84** and the AC motor **28.** The current sensors **96** provide sensed current input(s) **49** to the analog to digital converter **92.**

Individual digital isolators **98**-1 to **98**-7, collectively referred to as the digital isolator **98,** provide galvanic isolation for the AC motor **28,** the power switch elements **84,** and spacecraft power bus **25.** Ideally, the digital isolators **98**-1 to **98**-7 are strictly digital signal isolators, and do not pass any analog signals, even in the face of noise from the very high dv/dt pulse width modulated (PWM) signals generated by the digital control system **86.** The depicted embodiment shows an individual digital isolator (**98**-1, **98**-2, and **98**-3) coupling the digital control system **86** to the individual power switch elements: switch **84**-1, switch **84**-2, and switch **84**-3, respectively.

The temperature sensor **90** may be any commercially available temperature sensor suitable for the application. The temperature sensor **90** may sense temperature of the rotor in the AC motor **28** and provide rotor temperature input on node **47** to an analog to digital converter **92.** The analog to digital converter **92** may be any commercially available analog to digital converter suitable for the application. The analog to digital converter **92** receives sensed analog signals via nodes **33, 49,** and **47,** and converts the sensed analog signals to respective digital signals, which are provided as input (at node **45)** to the digital control system **86.** Sensed rotor currents on node **49** of the AC motor **28** are collectively sensed from nodes **35**-1, **35**-2, and **35**-3, and sensed current from the spacecraft power bus **25** is input on node **43.**

Position sensor **94** senses a position of the rotor associated with the AC motor **28;** that sensed position becomes a rotor position on the node **41.** The position sensor **94** also senses a speed of the rotor that becomes a rotor speed at node **43.** In operation, the position sensor **94** senses an analog signals on the node **37** and outputs a digital signal on the nodes **39**-1, **39**-2, **and 39**-3. In an embodiment, the position sensor **94** comprises the Hall sensor **94**-1, the Hall sensor **94**-2, and the Hall sensor **94**-3. However, in other embodiments, the position sensor **94** may comprise one or more from the set including: analog sensors, optical encoders, resolvers, resistive devices, and magneto-resistive devices, and in various embodiments, the position sensor **94** may perform one or more position sensing schemes to produce or generate the required digital signal on the nodes **39-1, 39-2,** and **39-3.**

Turning attention again to the digital control system **86,** the digital control system **86** comprises the digital signal processing components and modules for the motor controller **26.** The functionality of the digital control system **86** can be performed by a variety of combinations of digital logic elements as known in the art, for example, FOCs, sinusoidal drives, and AC motor control algorithms. The digital control system **86** may further comprise one or more field programmable gate arrays (FPGA), Application Specific Integrated Circuits (ASIC), Digital Signal Processors (DSP), general purpose microcontrollers and microprocessors. Depending on the arrangement of components and modules within the digital control system **86,** there may be one or more registers, memory management controls, data management controls, system timing and logic blocks arranged to perform the functions described herein. In the non-limiting example of FIG. 2, the digital control system **86** includes a FOC **108,** a nonvolatile memory (NVM **88),** a spacecraft interface and RWA control logic **110,** a block comprising speed sense logic **106,** a block comprising position estimator logic **104,** an ADC driver and scaler **102,** the pulse width modulators **100-1,** 100-2, and **100-3,** and a test interface **120.** In other embodiments, the digital control system **86** comprises a Field Programmable Gate Array (FPGA) or an Application Specific Integrated Circuit (ASIC). The digital control system **86** may be buffered from analog signal processing in the remainder of the RWA **20** via the digital isolators **98.** The digital control system **86** provides feedback (telemetry) as a data output command on lead **29** to a spacecraft control module **22** (for example, the status of the motor controller **26** and the AC motor **28).**

The digital control system **86** stores parameters and variables associated with a plurality of AC motors in the NVM **88.** The NVM **88** can include any known form of storage medium, or any type of memory technology, including any types of read-only memory or random access memory or any combination thereof. This encompasses a wide variety of media that include, for example but not limited to, an electronic, magnetic, optical, electromagnetic, infrared, or semiconductor system, apparatus, device, or propagation medium. In some embodiments, NVM **88** includes non-volatile, removable, and/or non-removable media, for example, random-access memory (RAM), read-only memory (ROM), electrically erasable programmable read-only memory (EEPROM), solid state memory or other memory technology, CD ROM, DVD, other optical disk storage, magnetic tape, magnetic disk storage or other magnetic storage devices, and any other medium that can be used to store desired data. For sake of simplicity of illustration, the NVM **88** is illustrated as a single block external to the digital control system **86;** however, NVM **88** can be distributed and portions of it may be internal or external to the digital control system **86.**

Non-limiting examples of parameters associated with each AC motor of the plurality of AC motors stored in NVM **88** include friction, torque constants, and maximum current. The NVM **88** may also store algorithms and variables for a variety of supported communication protocols, memory management protocols, and timing protocols. Based on a command input at lead **27,** the position sensor feedback at nodes **33** and **35,** and retrieved parameters associated with the AC motor **28,** the digital control system **86** controls activation for the arrangement of power switch elements **84,** (via the pulse width modulators **100-1, 100-2,** and **100-3)** and generates data output at lead **29.** In an embodiment, the command input at lead **27** is a serial command input that has been user requested, and the data output at lead **29** is a serial data output.

The FOC **108** is coupled to pulse width modulators **100**-1, **100**-2, **and 100**-3 via nodes **52**-1, **52**-2, and **52**-3 (collectively **52).** In an embodiment, the pulse width modulators **100** perform pulse width modulation under control of the FOC **108.** In one embodiment, the pulse width modulators **100-1, 100-2, and 100-3** perform spread-spectrum space vector pulse width modulation (SVPWM) and their output activates the arrangement of power switch elements **84** as described herein.

The FOC **108** is coupled to the spacecraft interface and RWA control logic **110,** the speed sense logic **106,** the position estimator logic **104,** and the ADC driver and scaler **102** via node **53.** The speed sense logic **106** determines a rotor speed of the AC motor **28** that may be communicated to external spacecraft control via the spacecraft interface and RWA control logic **110.** The position estimator **104** receives the output from the position sensor **94,** processes it, and communicates it to the FOC **108** and to the to external spacecraft control via the spacecraft interface and RWA control logic **110.** The ADC **92** is configured to receive one or more from the set including: sensed spacecraft input power bus current on node **33,** sensed motor phase currents on node **49,** and sensed motor temperature on node **47.** The ADC driver and scaler **102** is digitally isolated by 98-4 from the ADC **92.** The ADC driver and scaler **102** scales and drives the signals received from the analog to digital converter **92** at node **45.**

The spacecraft interface and RWA control logic **110** is coupled to the speed sense logic **106** via node **51.** The speed sense module receives the rotor speed input on node **35** (e.g., hall sensor data) and converts that to speed information (e.g., RPM) which it also sends to the spacecraft interface and RWA control logic **110.** The spacecraft interface and RWA control logic **110** may perform the function of accepting the user requested command protocol and configuring logic, timing, and data handling based thereon such that (i) generated data output at lead **29** meets the user requirement, and (ii) command input at lead **27** is received accordingly for use within the digital control system **86.** In addition, the spacecraft interface and RWA control logic **110** conditions the data signals for the FOC **108.**

FIG. 3 provides a flow chart for a method **300** for a high efficiency motor controller **26** of FIG. 2. In the provided motor controller **26** embodiment, the digital control system **86** executes an algorithm and associated rules, references NVM **88,** and drives the arrangement of power switch elements in the performance of the method steps. As can be appreciated in light of the disclosure, the order of the method steps is not limited to the sequential execution illustrated in FIG. 3, rather the method steps may be performed in one or more varying orders as applicable, and in accordance with the present disclosure. As can further be appreciated, one or more steps of the method may be added or removed without altering the spirit of the process.

At **302** power is received from the spacecraft **10.** At **304,** initialization of components is performed, including detecting and identifying motor **28.** At **306,** parameters and variables associated with the identified motor **28** are retrieved. Subsequent to retrieval of the parameters and variables, an additional initialization may be performed, to set proper timing and data management. At **308** a communication protocol may be received. As previously mentioned, the communication protocol may be serial or parallel, and may be user supplied or be provided by the spacecraft **10.** At **310,** a command from the spacecraft **10** is received. At **312,** motor control is generated. Output to the spacecraft, via lead **29,** may occur at any time in the performance of the method **300,** and may be initiated by input commands received on lead **27.** In addition, current may travel between the spacecraft **10** and the motor controller **26,** for example, within the spacecraft power bus **25.**

Notably, the provided motor controller **26** may perform the full range of motor control, off-loading the spacecraft **10** of these duties. For example, the spacecraft **10** no longer has to "know" motor **28** features, such as bearing drag, of the specific motor **28** employed by any given RWA **20,** process those features and then send motor control commands back to the RWA **20.** This compartmentalization increases the ease of manufacturing and quality assurance. Accordingly, the provided motor controller **26** and controlled motor assembly **40** provides various technical effects, such as improving efficiency while reducing weight, parts count, size, and cost. In addition to the use with an RWA, the controlled motor assembly **40** may be combined with one or more from the set including: a linear position system, a gimbal mechanism, an antenna mechanism, and a fan for an Environmental Control and Life Support System (ECLSS).

.

## Claims

1. A motor controller (26) comprising:
an internal power bus filter (82) configured to inhibit electrical and electromagnetic noise from being communicated between a spacecraft power bus (25) associated with a spacecraft and an internal power bus of a reaction wheel assembly, RWA, bus (31);
an arrangement of power switch elements (84) providing a path for motor phase currents associated with an alternating current, AC, motor, the arrangement of power switch elements coupled between the AC motor and the internal RWA bus (31), **characterized in that** the power switch elements are Gallium Nitride (GaN) transistors; and **in that** the motor controller further comprises
a digital control system (86) coupled to the AC motor and the arrangement of power switch elements, the digital control system configured to
detect and identify the AC motor (step 304),
retrieve parameters associated with the AC motor from a memory (step 306),
receive a command input (310),
receive position sensor feedback (nodes 33 and 35) associated with the AC motor, and
based on the command input, the position sensor feedback and the parameters associated with the AC motor, (i) control activation of the arrangement of power switch elements, and (ii) generate a data output,
wherein the digital control system comprises a field oriented control, FOC, coupled to pulse width modulators (100 -1,100 -2, 100 -3) via nodes (52 -1, 52 -2, 52 -3), wherein the pulse width modulators (100) are configured to perform spread-spectrum space vector pulse width modulation (SVPWM) under control of the FOC (108) and the outputs of the pulse width modulators (100) activate the arrangement of power switch elements (84).

2. The motor controller of claim 1, wherein the parameters associated with the AC motor comprise one or more of torque constants, friction, and max current.

3. The motor controller of claim 2, wherein the position sensor feedback comprises a rotor position or a rotor speed associated with the AC motor.

4. The motor controller of claim 3, further comprising an analog to digital converter, ADC, (92) coupling the position sensor feedback (nodes 33 and 35) to the digital control system (86), the ADC configured to receive one or more from the set including: a sensed motor current, a sensed motor temperature, a sensed input power bus voltage, and a sensed internal voltage reference.

5. The motor controller of claim 4, wherein the AC motor is a high speed alternating current, AC, permanent magnet synchronous motor, PMSM.

6. The motor controller of claim 5, wherein the digital control system is configured to receive the command input in accordance with a user requested serial protocol, and adjust timing protocols and data management protocols within the digital control system (86) accordingly.

7. The motor controller of claim 1, wherein the digital control system further comprises one or more from the set including: a field programmable gate array, FPGA, an Application Specific Integrated Circuit, ASIC, a Digital Signal Processor DSP, a general purpose microcontroller, and a microprocessor.

8. The motor controller of claim 7, wherein the position sensor comprises one or more from the set including: a digital hall-effect sensor, a resolver, an analog sensor, a magneto-restrictive sensor, and an optical encoder.

9. A method for performing motor control, in a motor controller (26) comprising an internal power bus filter (82) configured to inhibit electrical and electromagnetic noise from being communicated between a spacecraft power bus (25) associated with a spacecraft and an internal power bus of a reaction wheel assembly, RWA, bus (31), the method comprising:
configuring power switch elements (84) in an arrangement providing a path for motor phase currents associated with an alternating current, AC, motor, **characterized in that** the power switch elements are Gallium Nitride (GaN) transistors; and **in that** the method further comprises coupling the arrangement of power switch elements between the AC motor and the RWA bus (31);
at a digital control system (86) coupled to the power switch elements:
detecting and identifying the AC motor (step 304);
retrieving parameters associated with the AC motor from a memory (step 306);
receiving a command input (310);
receiving position sensor feedback (nodes 33 and 35) associated with the AC motor; and
based on the command input, the position sensor feedback and the parameters associated with the AC motor, (i) controlling activation of the arrangement of power switch elements, and (ii) generating a data output
wherein the digital control system comprises a field oriented control, FOC, coupled to pulse width modulators (100 -1,100 -2, 100 -3) via nodes (52 -1, 52 -2, 52 -3), wherein the pulse width modulators (100) perform spread-spectrum space vector pulse width modulation (SVPWM) under control of the FOC (108) and the outputs of the pulse width modulators (100) activate the arrangement of power switch elements (84).

## Patentansprüche

1. Motorsteuereinheit (26), umfassend:
ein internes Energiebusfilter (82), das konfiguriert ist, um zu verhindern, dass elektrische und elektromagnetische Störungen zwischen einem Raumfahrzeug-Energiebus (25), der einem Raumfahrzeug zugeordnet ist, und einem internen Reaktionsradanordnungs-Energiebus (31) (RWA-Energiebus, RWA = reaction wheel assembly) übertragen werden;
eine Anordnung von Energieschaltelementen (84), die einen Weg für Motorphasenströme bereitstellt, die einem Wechselstrommotor (AC-Motor) zugeordnet sind, wobei die Anordnung von Energieschaltelementen zwischen den Wechselstrommotor und den internen RWA-Bus (31) geschaltet ist, **dadurch gekennzeichnet, dass** die Energieschaltelemente Galliumnitrid-Transistoren (GaN-Transistoren) sind; und dadurch, dass die Motorsteuereinheit ferner umfasst
ein digitales Steuerungssystem (86), das mit dem Wechselstrommotor und der Anordnung von Energieschaltelementen verbunden ist, wobei das digitale Steuerungssystem konfiguriert ist zum
Erkennen und Identifizieren des Wechselstrommotors (Schritt 304),
Abrufen von Parametern, die dem Wechselstrommotor zugeordnet sind, aus einem Speicher (Schritt 306),
Empfangen einer Befehlseingabe (310),
Empfangen von Positionssensorrückmeldungen (Knoten 33 und 35), die dem Wechselstrommotor zugeordnet sind, und
auf der Grundlage der Befehlseingabe, der Positionssensorrückmeldungen und der Parameter, die dem Wechselstrommotor zugeordnet sind, (i) Steuern der Aktivierung der Anordnung von Energieschalterelementen, und (ii) Erzeugen einer Datenausgabe,
wobei das digitale Steuerungssystem eine feldorientierte Steuerung (field oriented control, FOC) umfasst, die über Knoten (52-1, 52-2, 52-3) mit Pulsbreitenmodulatoren (100-1, 100-2, 100-3) verbunden ist, wobei die Pulsbreitenmodulatoren (100) konfiguriert sind, um eine Spreizspektrum-Raumvektor-Pulsbreitenmodulation (spread-spectrum space vector pulse width modulation, SVPWM) unter der Steuerung der FOC (108) durchzuführen, und die Ausgänge der Pulsbreitenmodulatoren (100) die Anordnung von Energieschaltelementen (84) aktivieren.

2. Motorsteuereinheit nach Anspruch 1, wobei die dem Wechselstrommotor zugeordneten Parameter eines oder mehrere aus Drehmomentkonstanten, Reibung und Maximalstrom umfassen.

3. Motorsteuereinheit nach Anspruch 2, wobei die Positionssensorrückmeldungen eine Rotorposition oder eine Rotordrehzahl umfassen, die dem Wechselstrommotor zugeordnet ist.

4. Motorsteuereinheit nach Anspruch 3, die ferner einen Analog-Digital-Wandler (analog to digital converter, ADC) (92) umfasst, der die Positionssensorrückmeldungen (Knoten 33 und 35) mit dem digitalen Steuerungssystem (86) verbindet, wobei der ADC konfiguriert ist, um eines oder mehrere aus dem Satz zu empfangen, der einschließt: einen erfassten Motorstrom, eine erfasste Motortemperatur, eine erfasste Energiebus-Eingangsspannung und eine erfasste interne Spannungsreferenz.

5. Motorsteuereinheit nach Anspruch 4, wobei der Wechselstrommotor ein Wechselstrom-Permanentmagnetsynchronmotor (AC-Permanentmagnetsynchronmotor) (permanent magnet synchronous motor, PMSM) mit hoher Drehzahl ist.

6. Motorsteuereinheit nach Anspruch 5, wobei das digitale Steuerungssystem konfiguriert ist, um die Befehlseingabe gemäß einem vom Benutzer angeforderten seriellen Protokoll zu empfangen und Zeitsteuerungsprotokolle und Datenverwaltungsprotokolle innerhalb des digitalen Steuerungssystems (86) entsprechend anzupassen.

7. Motorsteuereinheit nach Anspruch 1, wobei das digitale Steuerungssystem ferner eines oder mehrere aus dem Satz umfasst, der einschließt: ein feldprogrammierbares Gate-Array, FPGA (field programmable gate array), eine anwendungsspezifische integrierte Schaltung, ASIC (Application Specific Integrated Circuit), einen digitalen Signalprozessor DSP (Digital Signal Processor), einen Mehrzweck-Mikrocontroller und einen Mikroprozessor.

8. Motorsteuereinheit nach Anspruch 7, wobei der Positionssensor eines oder mehrere aus dem Satz umfasst, der einschließt: einen digitalen Hall-Effekt-Sensor, einen Drehmelder, einen Analogsensor, einen magnetostriktiven Sensor und einen optischen Impulsgeber.

9. Verfahren zum Durchführen einer Motorsteuerung in einer Motorsteuereinheit (26), die ein internes Energiebusfilter (82) umfasst, das konfiguriert ist, um zu verhindern, dass elektrische und elektromagnetische Störungen zwischen einem Raumfahrzeug-Energiebus (25), der einem Raumfahrzeug zugeordnet ist, und einem internen Reaktionsradanordnungs-Energiebus (RWA-Bus) (31) übertragen werden, wobei das Verfahren umfasst:
Konfigurieren von Energieschaltelementen (84) in einer Anordnung, die einen Weg für Motorphasenströme bereitstellt, die einem Wechselstrommotor, AC-Motor, zugeordnet sind, **dadurch gekennzeichnet, dass** die Energieschaltelemente Galliumnitrid-Transistoren (GaN-Transistoren) sind; und dadurch, dass das Verfahren ferner umfasst
Verbinden der Anordnung von Energieschaltelementen zwischen dem Wechselstrommotor und dem RWA-Bus (31);
bei einem digitalen Steuerungssystem (86), das mit den Energieschaltelementen verbunden ist:
Erkennen und Identifizieren des Wechselstrommotors (Schritt 304);
Abrufen von Parametern, die dem Wechselstrommotor zugeordnet sind, aus einem Speicher (Schritt 306);
Empfangen einer Befehlseingabe (310);
Empfangen von Positionssensorrückmeldungen (Knoten 33 und 35), die dem Wechselstrommotor zugeordnet sind; und
auf der Grundlage der Befehlseingabe, der Positionssensorrückmeldungen und der Parameter, die dem Wechselstrommotor zugeordnet sind, (i) Steuern der Aktivierung der Anordnung von Energieschaltelementen und (ii) Erzeugen einer Datenausgabe
wobei das digitale Steuerungssystem eine feldorientierte Steuerung, (field oriented control, FOC), umfasst, die über Knoten (52-1, 52-2, 52-3) mit Pulsbreitenmodulatoren (100-1, 100-2, 100-3) verbunden ist, wobei die Pulsbreitenmodulatoren (100) eine Spreizspektrum-Raumvektor-Impulsbreitenmodulation (SVPWM) unter der Steuerung der FOC (108) durchführen und die Ausgänge der Impulsbreitenmodulatoren (100) die Anordnung von Energieschaltelementen (84) aktivieren.

## Revendications

1. Dispositif de commande de moteur (26) comprenant :
un filtre de bus d'alimentation interne (82), conçu pour empêcher la communication de bruit électrique et électromagnétique entre un bus d'alimentation d'engin spatial (25) associé à un engin spatial et un bus d'alimentation interne d'un bus d'ensemble roue de réaction, RWA, (31) ;
un agencement d'éléments de commutation de puissance (84) fournissant un chemin pour les courants de phase du moteur associés à un moteur à courant alternatif, CA, l'agencement d'éléments de commutation de puissance étant accouplé entre le moteur à CA et le bus interne de RWA (31), **caractérisé en ce que** les éléments de commutation de puissance sont des transistors en nitrure de gallium (GaN) ; et **en ce que** le dispositif de commande de moteur comprend en outre
un système de commande numérique (86) accouplé au moteur à CA et à l'agencement d'éléments de commutation de puissance, le système de commande numérique étant conçu pour
détecter et identifier le moteur à CA (étape 304),
récupérer des paramètres associés au moteur à CA dans une mémoire (étape 306), recevoir une entrée d'instruction (310),
recevoir le retour du capteur de position (nœuds 33 et 35) associé au moteur à CA et,
en fonction de l'entrée d'instruction, du retour du capteur de position et des paramètres associés au moteur à CA, (i) commander l'activation de l'agencement des éléments de commutation de puissance et (ii) générer une sortie de données,
dans lequel le système de commande numérique comprend une commande à flux orienté, FOC, accouplée à des modulateurs de largeur d'impulsion (100-1, 100-2, 100-3) via des nœuds (52-1, 52-2, 52-3), dans lequel les modulateurs de largeur d'impulsion (100) sont conçus pour effectuer une modulation de largeur d'impulsions vectorielles spatiales (SVPWM) à spectre étalé sous la commande de la FOC (108) et les sorties des modulateurs de largeur d'impulsion (100) activent l'agencement d'éléments de commutation de puissance (84).

2. Dispositif de commande de moteur selon la revendication 1, dans lequel les paramètres associés au moteur à CA comprennent un ou plusieurs éléments parmi des constantes de couple, le frottement et le courant maximal.

3. Dispositif de commande de moteur selon la revendication 2, dans lequel le retour de capteur de position comprend une position de rotor ou une vitesse de rotor associée au moteur à CA.

4. Dispositif de commande de moteur selon la revendication 3, comprenant en outre un convertisseur analogique-numérique, CAN, (92) couplant le retour de capteur de position (nœuds 33 et 35) au système de commande numérique (86), le CAN étant conçu pour recevoir un ou plusieurs éléments parmi l'ensemble comprenant : un courant de moteur détecté, une température de moteur détectée, une tension de bus d'alimentation d'entrée détectée et une référence de tension interne détectée.

5. Dispositif de commande de moteur selon la revendication 4, dans lequel le moteur à CA est un moteur synchrone à aimants permanents, PMSM, à courant alternatif, CA, à grande vitesse.

6. Dispositif de commande de moteur selon la revendication 5, dans lequel le système de commande numérique est conçu pour recevoir l'entrée d'instruction selon un protocole série demandé par l'utilisateur et pour régler en conséquence les protocoles de synchronisation et les protocoles de gestion de données dans le système de commande numérique (86).

7. Dispositif de commande de moteur selon la revendication 1, dans lequel le système de commande numérique comprend en outre un ou plusieurs éléments parmi l'ensemble comprenant : un réseau de portes programmables sur site, FPGA, un circuit intégré propre à une application, ASIC, un processeur de signaux numériques, DSP, un microcontrôleur à usage général et un microprocesseur.

8. Dispositif de commande de moteur selon la revendication 7, dans lequel le capteur de position comprend un ou plusieurs éléments parmi l'ensemble comprenant : un capteur à effet Hall numérique, un résolveur, un capteur analogique, un capteur magnétorestrictif et un codeur optique.

9. Procédé de réalisation d'une commande de moteur dans un dispositif de commande de moteur (26) comprenant un filtre de bus d'alimentation interne (82) conçu pour empêcher la communication de bruit électrique et électromagnétique entre un bus d'alimentation d'engin spatial (25) associé à un engin spatial et un bus d'alimentation interne d'un bus d'ensemble roue de réaction, RWA, (31), le procédé comprenant :
la configuration d'éléments de commutation de puissance (84) dans un agencement fournissant un chemin pour les courants de phase moteur associés à un moteur à courant alternatif, CA, **caractérisé en ce que** les éléments de commutation de puissance sont des transistors en nitrure de gallium (GaN) ; et **en ce que** le procédé comprend en outre
l'accouplement de l'agencement d'éléments de commutation de puissance entre le moteur à CA et le bus de RWA (31) ;
au niveau d'un système de commande numérique (86) accouplé aux éléments de commutation de puissance :
la détection et l'identification du moteur à CA (étape 304) ;
la récupération de paramètres associés au moteur à CA à partir d'une mémoire (étape 306) ;
la réception d'une entrée d'instruction (310) ;
la réception d'un retour du capteur de position (nœuds 33 et 35) associé au moteur à CA ; et
en fonction de l'entrée d'instruction, du retour de capteur de position et des paramètres associés au moteur à CA, (i) la commande de l'activation de l'agencement d'éléments de commutation de puissance et (ii) la production d'une sortie de données ;
dans lequel le système de commande numérique comprend une commande à flux orienté, FOC, accouplée à des modulateurs de largeur d'impulsion (100-1, 100-2, 100-3) via des nœuds (52-1, 52-2, 52-3), dans lequel les modulateurs de largeur d'impulsion (100) effectuent une modulation de largeur d'impulsions vectorielles spatiale (SVPWM) à spectre étalé sous la commande de la FOC (108) et les sorties des modulateurs de largeur d'impulsion (100) activent l'agencement d'éléments de commutation de puissance (84).
